# EUROPÄISCHE PATENTANMELDUNG

(11) **EP 0 581 991 A1**
(43) Veröffentlichungstag der Anmeldung: **09.02.1994**
(21) Anmeldenummer: 92113450.8
(22) Anmeldetag: 06.08.1992
(51) Int. Cl.: H04Q 3/68

(54) **Koppelnetz, bei dem Kurzwege schaltbar sind**

(71) Anmelder: SIEMENS AKTIENGESELLSCHAFT, D-80333 München (DE)
(72) Erfinder: Grabowski, Karl-Heinz, Dipl.-Ing., W-8038 Gröbenzell (DE)

(57) **Zusammenfassung**

Für ein modular strukturiertes Koppelnetz in mehrstufiger Umkehrgruppierung, bei dem Kurzwege schaltbar sind, wird eine besondere Beschaltung der Koppelmoduln der ersten Stufe mit an das Koppelnetz angeschlossenen Eingangs- und Ausgangsleitungen vorgeschlagen, die eine Reduzierung der Anzahl der auf diesen Koppelmoduln vorzusehenden Koppelelemente um ein Drittel mit sich bringt.

## Beschreibung

In einem Vermittlungsnetz läuft in einem Netzknoten eine Mehrzahl von Verbindungsleitungen zusammen. Zur wahlfreien Verbindung der Verbindungsleitungen sind in den Netzknoten Koppelnetze vorgesehen. So ist beispielsweise aus IEEE Journal on Selected Areas in Communications. Vol. 9, No.8, Oct. 1991, ein zweistufiges, modular aufgebautes Koppelnetz in Umkehrgruppierung bekannt, bei dem
- das Koppelnetz mit einer Vielzahl von jeweils durch eine Simplex-Eingangsleitung (EL) und eine Simplex-Ausgangsleitung (AL) gegebenen Duplex-Verbindungsleitungen (VL) verbunden ist
- das Koppelnetz mit einer Mehrzahl von in Stufen angeordneten Koppelmoduln (SM) gebildet ist
- jedes Koppelmodul ebenso viele Simplex-Eingänge wie Simplex-Ausgänge aufweist
- jeder Simplex-Eingang eines Koppelmoduls mit jedem Simplex-Ausgang desselben Koppelmoduls verbindbar ist
- jedes Koppelmodul mit einer Mehrzahl von doppelt so viele Simplex-Eingänge (e) wie Simplex-Ausgänge (a) aufweisenden Koppelelementen (SE) gebildet ist
- die Koppelelemente in zwei Reihen angeordnet sind
- ein Koppelelement der zweiten Reihe zusammen mit zwei Koppelelementen der ersten Reihe, deren Simplex-Ausgänge mit den Simplex-Eingängen des Koppelelements der zweiten Reihe verbunden sind, eine Koppelelementgruppe bilden
- die Simplex-Eingänge der Koppelmoduln der ersten Stufe einerseits mit den Simplex-Eingängen der koppelmodulzugehörigen Koppelelemente der ersten Reihe verbunden sind und andererseits zum Anschluß von Eingangsleitungen zur Verfügung stehen
- die Simplex-Ausgänge eines Koppelmoduls durch Simplex-Ausgänge eines koppelmodulzugehörigen Koppelelements gegeben sind
- zur Schaltung von Kurzwegen ein gleich großer Teil der Simplex-Eingänge und der Simplex-Ausgänge eines Koppelmoduls der ersten Stufe mit jeweils zur gleichen Verbindungsleitung gehörenden Eingangs- bzw. Ausgangsleitungen verbunden ist, während die übrigen Simplex-Eingänge bzw. Simplex-Ausgänge mit Signale von bzw. zu Koppelmoduln der zweiten Stufe heranführenden bzw. weiterleitenden Zwischenleitungen (ZL) verbunden sind
- an die Ausgänge ein und derselben Koppelelementgruppe nur Ausgangsleitungen oder nur Zwischenleitungen angeschlossen sind.

Dieses Koppelnetz weist die Fähigkeit auf, in der ersten Stufe Kurzwege zu schalten.

Die Erfindung zeigt nun einen Weg, unter Beibehaltung dieser Fähigkeit eine Schaltungsanordnung für ein Koppelmodul der ersten Stufe eines derartigen Koppelnetzes anzugeben, das eine besonders geringe Anzahl von Koppelelementen erfordert.

Das Problem wird bei einer Schaltungsanordnung gemäß der vorstehend umrissenen Art durch Hinzunahme der Merkmale gelöst, daß
- die Eingänge des einen Koppelelements der ersten Reihe einer Koppelelementgruppe, deren Ausgänge mit Ausgangsleitungen verbunden sind, nur mit Eingangsleitungen verbunden sind
- die Eingänge des anderen Koppelelements der ersten Reihe einer Koppelelementgruppe, deren Ausgänge mit Ausgangsleitungen verbunden sind, nur mit Zwischenleitungen verbunden sind
- eine Reihe zusätzlicher Koppelelemente vorgesehen ist, deren Eingänge nur mit den Eingangsleitungen verbunden sind und deren Ausgänge mit Zwischenleitungen verbunden sind.

Die erfindungsgemäße Schaltungsanordnung bringt zum einen eine Schaltbarkeit von Kurzwegen und zum andern einen beispielsweise um ein Drittel reduzierten Aufwand für die Anzahl der in den Koppelmoduln der ersten Stufe vorzusehenden Koppelelemente mit sich, wobei Verbindungen, die nicht über Kurzwege durchgeschaltet werden, über eine reduzierte Anzahl von beispielsweise fünf anstatt von bisher sechs Koppelelementen durch das Koppelnetzwerk geschaltet werden. Die Reduktion der Anzahl von Koppelelementen, über die die Signale von Verbindungen durchgeschaltet werden, geht mit einer Reduktion der insgesamt aufzuwendenden Verarbeitungszeit und Wartezeit bei der Durchschaltung dieser Signale durch das Koppelnetz einher. Darüber hinaus resultiert die verringerte Anzahl von Koppelelementen in einem reduzierten Strombedarf.

Die Erfindung wird nun als Ausführungsbeispiel in zum Verständnis erforderlichem Umfang anhand von Figuren beschrieben.
Dabei zeigen
- Fig. 1: die erfindungsgemäße Schaltungsanordnung von Koppelelementen in einem Koppelmodul einer ersten Stufe eines Koppelnetzwerks
- Fig. 2: ein Koppelnetz in Umkehrgruppierung, bei dem die Koppelmoduln in zwei Stufen angeordnet sind
- Fig. 3: die herkömmliche Schaltungsanordnung von Koppelelementen in einem Koppelmodul
- Fig. 4: nähere Einzelheiten der Verdrahtung des erfindungsgemäßen Koppelmoduls nach Fig. 1 in der ersten Stufe des Koppelnetzes nach Fig. 2.

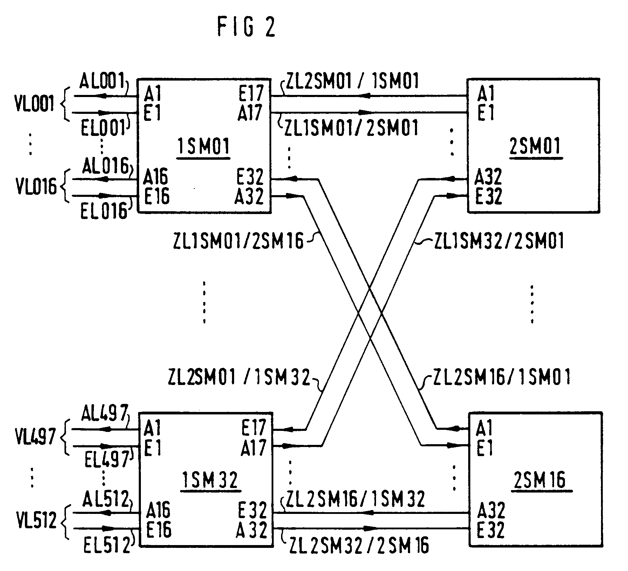

Fig. 2 zeigt ein Koppelnetzwerk, bei dem Koppelmodule SM in einer zwei Stufen aufweisenden Umkehrgruppierung angeordnet sind. Im Ausführungsbeispiel möge die erste Stufe mit den Koppelmoduln 1SMO1...1SM32 und die zweite Stufe mit den Koppelmoduln 2SMO1...2SM16 gebildet sein. Ein solches Koppelnetzwerk ist an sich beispielsweise aus Journal on Selected Areas in Communications, Vol. 9, No.8, Oct. 1991, Fig. 7 und Fig. 8 bekannt und braucht deshalb hier nicht näher beschrieben zu werden. Das Koppelnetzwerk ist mit einer Vielzahl von Verbindungsleitungen VLOO1.. ..VL512 verbunden. Die Verbindungsleitungen können an ihrem nicht dargestellten Ende jeweils beispielsweise mit einer entfernten Vermittlungseinrichtung oder mit einer Teilnehmereinrichtung verbunden sein. Auf den Verbindungsleitungen findet eine Übertragung von Signalen in beiden Übertragungsrichtungen statt, wobei im Bereich des Koppelnetzes die auf einer jeweiligen Verbindungsleitung in Richtung zum Koppelnetz übertragenen Signale auf einer Eingangsleitung EL und die von dem Koppelnetz abgehenden Signale auf einer Ausgangsleitung AL geführt werden. Bei den Signalen möge es sich um im Zuge von virtuellen Verbindungen nach einem asynchronen Übertragungsverfahren (asynchronous transfer mode) übertragene Nachrichtenzellen handeln, die mit konstanter Nachrichtenzellenrate übertragen werden. Es sei jedoch ausdrücklich darauf hingewiesen, daß die erfindungsgemäße Schaltungsanordnung nicht an ein bestimmtes Übertragungsverfahren gebunden ist. Die Verbindungsleitungen sind jeweils mit Eingängen E und Ausgängen A eines Koppelmoduls 1SM der ersten Stufe des Koppelnetzes verbunden. Die Koppelmoduln SM des Koppelnetzes weisen jeweils ebenso viele Eingänge E wie Ausgänge A auf. Bei den einzelnen Koppelmoduln ist jeder Eingang auf jeden Ausgang durchschaltbar. Die Koppelmoduln 1SM der ersten Stufe sind über jeweils zwei Zwischenleitungen ZL für jede Übertragungsrichtung mit jedem der Koppelmoduln 2SM der zweiten Stufe verbunden. Die Bezeichnung der Zwischenleitungen ZL ist derart gebildet, daß eine jeweilige Bezeichnung die Richtung der Übertragung von Signalen von einem vorgegebenen Koppelmodul zu einem bestimmten Koppelmodul der jeweils anderen Stufe angibt. So bezeichnet die Zwischenleitung mit der Bezeichnung ZL1SMO1/2SMO1 die Zwischenleitung, auf der Signale von dem Koppelmodul 1SMO1 der ersten Stufe zum Koppelmodul 2SMO1 der zweiten Koppelstufe und die Zwischenleitung mit der Bezeichnung ZL2SM16/1SMO1 die Zwischenleitung, auf der Signale von dem Koppelmodul 2SM16 zu dem Koppelmodul 1SMO1 übertragen werden. Durch die gegebene Art der Zusammenschaltung der Koppelmoduln in Verbindung mit der Durchschaltbarkeit jedes Eingangs auf jeden Ausgang eines jeweiligen Koppelmoduls ist jede Eingangsleitung auf jede Ausgangsleitung durchschaltbar.

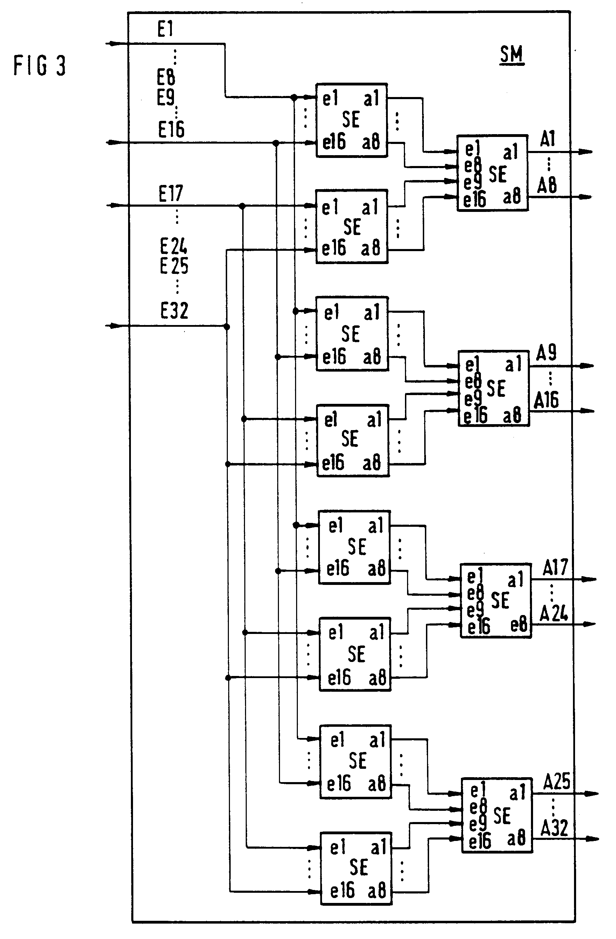

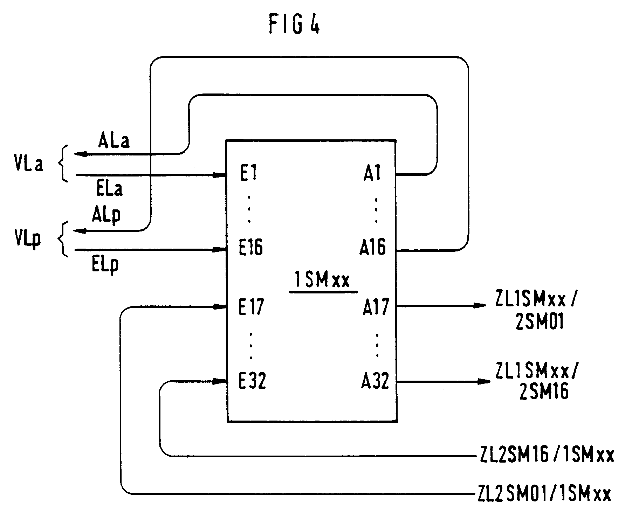

Fig. 3 zeigt den ebenfalls aus der angegebenen Literaturstelle Fig. 5 bekannten näheren Aufbau eines Koppelmoduls. Das Koppelmodul SM ist mit einer Mehrzahl von zwölf gleichen Koppelelementen SE gebildet. Die Koppelelemente weisen jeweils 16 Eingänge e und acht Ausgänge a, also doppelt so viele Eingänge wie Ausgänge auf. Acht der Koppelelemente sind in einer ersten Reihe und vier der Koppelelemente sind in einer zweiten Reihe angeordnet. Die Ausgänge von zwei Koppelelementen der ersten Reihe sind mit den Eingängen eines Koppelelements der zweiten Reihe verbunden. Zwei Koppelelemente der ersten Reihe bilden zusammen mit einem Koppelelement der zweiten Reihe, dessen Eingänge mit den Ausgängen dieser beiden Koppelelemente der ersten Reihe verbunden sind, eine Koppelelementgruppe. Die Ausgänge a der Koppelelemente der zweiten Reihe bilden die Ausgänge A des Koppelmoduls. Die Eingänge E des Koppelmoduls sind mit den Eingängen e jeder Koppelelementgruppe verbunden. Die Koppelelemente sind an sich beispielsweise aus der angegebenen Literaturstelle Fig. 3 und Fig. 4 bekannt. In dem hier interessierenden Zusammenhang sei darauf hingewiesen, daß die Koppelelemente jeweils einen zentralen Speicher aufweisen mögen.

Eine auf einer Eingangsleitung EL einer Verbindungsleitung VL ankommende Nachrichtenzelle wird auf dem Koppelmodul sämtlichen mit dieser Eingangsleitung verbundenen Koppelelementen zugeführt. Anhand einer in den Nachrichtenzellen jeweils enthaltenen routing-Adresse überprüft jedes dieser Koppelelemente, ob die betrachtete Nachrichtenzelle zu einem ihrer Ausgänge angeschlossene Ausgangsleitung durchgeschaltet werden soll. Ist das nicht der Fall, so wird sie vernichtet. Ist dies der Fall, wird die betrachtete Nachrichtenzelle zu dem betreffenden Ausgang durchgeschaltet und dort gegebenenfalls über eine Anzahl weiterer Koppelelemente zu einer Ausgangsleitung einer Verbindungsleitung durchgeschaltet. Sämtliche von einem jeweiligen Eingang des Koppelnetzes zu einem jeweiligen Ausgang des Koppelnetzes durchzuschaltenden Nachrichtenzellen werden über denselben Weg übertragen.

Ein herkömmliches Koppelnetzwerk ist in beiden Stufen mit gleichen Koppelmoduln nach Fig. 3 der vorliegenden Beschreibung aufgebaut. Dabei sind die Koppelmoduln der ersten Stufe derart beschaltet, daß ein Teil, beispielsweise die Hälfte der Eingänge e von jeweiligen Koppelelementen der ersten Reihe über Eingänge E der Koppelmoduln z.B. die Eingänge E1...E8 bzw. E17...E24 mit Eingangsleitungen EL z.B. den Eingangsleitungen EL1...EL8 bzw. EL17...EL24 von Verbindungsleitungen VL1...VL8 bzw. VL17...VL24, und der verbleibende Teil der Eingänge e über Eingänge E des Koppelmoduls z.B. die Eingänge E9.. ..E16 bzw. E25...E32 mit Signale von Koppelmoduln der zweiten Stufe heranführenden Zwischenleitungen ZL verbunden sind und ein ebenso großer Teil der Ausgänge A des Koppelmoduls wie Eingänge E des Koppelmoduls mit den Ausgangsleitungen AL1...AL8 bzw. A9...A16 dieser Verbindungsleitungen VL1...VL8 bzw. VL17...VL24 verbunden sind. Der verbleibende Teil der Ausgänge des Koppelmoduls z.B. A17.. ..A32 ist mit Signale zu Koppelmoduln der zweiten Stufe führenden Zwischenleitungen verbunden. Diese Beschaltung der Koppelmoduln bringt neben der Möglichkeit, Kurzwege zu schalten, eine ausgeglichene Lastverteilung an den Ausgängen a der Koppelelemente mit sich.

Ein anderer Weg führt zu einer Beschaltung der Koppelmoduln der ersten Stufe, bei der mit den Eingängen e eines Koppelelements der ersten Reihe nur Eingangsleitungen von Verbindungsleitungen und bei der mit den Eingängen des jeweils anderen Koppelelements der zugehörigen Koppelelementgruppe nur Zwischenleitungen verbunden sind. Dabei ist wiederum ein ebenso großer Teil von Ausgängen eines jeweiligen Koppelmoduls mit den zugehörigen Ausgangsleitungen der Verbindungsleitungen verbunden, während der verbleibende Teil von Ausgängen mit Signale zu Koppelmoduln der zweiten Stufe führenden Zwischenleitungen verbunden ist. Bei dieser Beschaltung zeigt es sich, daß die Vermittlungsfunktion eines der Koppelelemente der ersten Reihe einer jeweiligen Koppelelementgruppe, an deren Ausgänge Zwischenleitungen angeschlossen sind, entbehrlich ist. Dies liegt darin begründet, daß die von den Zwischenleitungen ankommenden Signale ausschließlich zu einer der Ausgangsleitungen AL durchgeschaltet werden. Einen Signalweg von einem Koppelmodul der zweiten Stufe über ein Koppelmodul der ersten Stufe und wieder zurück zu einem Koppelmodul der zweiten Stufe existiert nicht. Bei einer Entbehrlichkeit jeweils eines Koppelelements der ersten Reihe einer Koppelelementgruppe ist auch die Vermittlungsfunktion eines der verbleibenden zwei Koppelelemente entbehrlich.

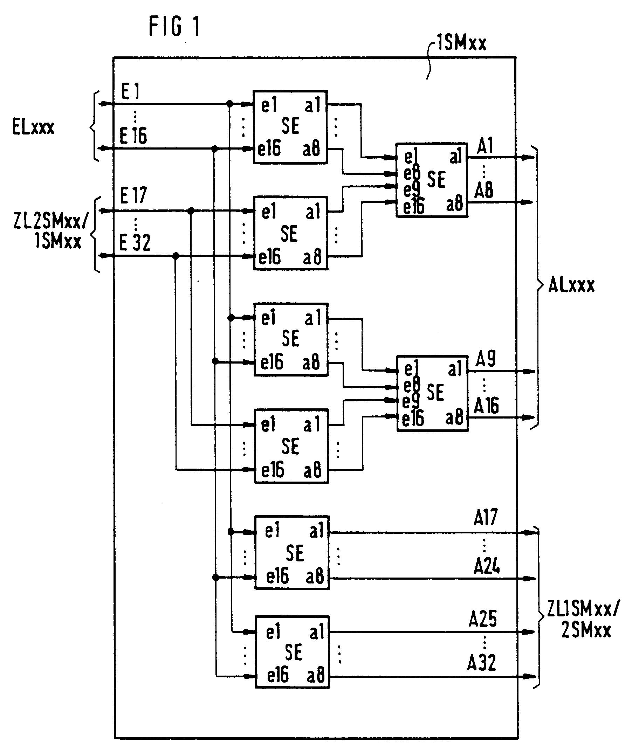

Fig. 1 zeigt die erfindungsgemäße Anordnung von Koppelelementen in einem Koppelmodul der ersten Stufe. Das Koppelmodul nach Fig. 1 weist gegenüber dem Koppelmodul nach Fig. 3 eine um vier erniedrigte Anzahl von Koppelelementen SE auf. Die Ausgänge der Koppelelemente der zweiten Reihe der beiden oberen Koppelelementgruppen sind mit Ausgangsleitungen ALxxx von Verbindungsleitungen VLxxx verbunden. Jeweils ein Koppelelement der beiden oberen Koppelelementgruppen ist eingangsseitig nur mit Eingangsleitungen verbunden, während das jeweils andere Koppelelement eingangsseitig mit Signale von Koppelmoduln der zweiten Stufe heranführenden Zwischenleitungen ZL2SMxxx/1SMxx verbunden ist. Die beiden unteren Koppelelemente sind mit ihren Eingängen e mit den Eingangsleitungen ELxxx verbunden. Die Ausgänge der beiden unteren Koppelelemente sind mit Signale zu Koppelmoduln der zweiten Stufe führenden Zwischenleitungen ZL1SMxx/2SMxx verbunden. Soll nun eine Signalverbindung von mit demselben Koppelmodul der ersten Stufe verbundenen Verbindungsleitungen hergestellt werden, so ist unter Auslassung des Weges über ein Koppelmodul der zweiten Stufe die Einrichtung eines Kurzweges möglich. Bei der Einrichtung eines Kurzweges wird also ein auf einer Verbindungsleitung an ein Koppelmodul der ersten Stufe herangeführtes Signal auf eine an dasselbe Koppelmodul angeschlossene Verbindungsleitung durchgeschaltet. Geht man von einer gleichmäßigen Verkehrsverteilung des dem Koppelnetz zugeführten Gesamtverkehrs aus, so entfällt, statistisch gesehen, der Bruchteil eines Koppelmoduls der ersten Stufe an der Gesamtzahl von Koppelmoduln der ersten Stufe des Gesamtverkehrs auf Kurzwege. Sind also in der ersten Stufe eines Koppelnetzes eine Anzahl g von 32 Koppelmoduln 1SMO1...SM32 vorgesehen, so entfällt 1/32 des Gesamtverkehrs auf Kurzwege. Der verbleibende Bruchteil von (g-l)/g des Gesamtverkehrs entfällt auf Verbindungen, bei denen die beteiligten Verbindungsleitungen an verschiedene Koppelmodule angeschlossen sind. Die Signale von diesen Verbindungsleitungen werden in an sich bekannter Weise zunächst über das zugehörige Koppelmodul der ersten Stufe einem Koppelmodul der zweiten Stufe zugeführt und von dort über das Koppelmodul der ersten Stufe, an das die betreffende Ausgangsleitung angeschlossen ist, dieser Ausgangsleitung zugeführt.

Fig. 4 verdeutlicht die Beschaltung eines erfindungsgemäßen Koppelmoduls 1SMxx der ersten Reihe. Die Hälfte der Eingänge E1...E32 und die Hälfte der Ausgänge A1...A32 des Koppelmoduls sind mit Eingangsleitungen ELa...ELp bzw. Ausgangsleitungen ALa...ALp von jeweiligen Verbindungsleitungen VLA...VLp verbunden. Diese Ausgangsleitungen sind dabei koppelmodulintern an die in Fig. 1 dargestellten Ausgänge der beiden Koppelelementgruppen angeschlossen. Die andere Hälfte der Eingänge E17...E32 ist mit Signalen von Koppelmoduln 2SMO1...2SM16 der zweiten Stufe zu den Koppelmoduln 1SMxx führenden Zwischenleitungen ZL2SMO1/1SMxx..ZL2SM16/1SMxx verbunden. Die Ausgänge A17.. ..A32 des Koppelmoduls 1SMxx sind mit Signale von dem Koppelmodul 1SMxx zu den Koppelmoduln 2SMO1...2SM16 der zweiten Stufe führenden Zwischenleitungen ZL1SMxx/2SMO1.. ..ZL1SMxx/2SM16 verbunden.

## Patentansprüche

1. Schaltungsanordnung für ein Koppelnetz, bei dem
- das Koppelnetz mit einer Vielzahl von jeweils durch eine Simplex-Eingangsleitung (EL) und eine Simplex-Ausgangsleitung (AL) gegebenen Duplex-Verbindungsleitungen (VL) verbunden ist
- das Koppelnetz mit einer Mehrzahl von in Stufen angeordneten Koppelmoduln (SM) gebildet ist
- jedes Koppelmodul ebenso viele Simplex-Eingänge wie Simplex-Ausgänge aufweist
- jeder Simplex-Eingang eines Koppelmoduls mit jedem Simplex-Ausgang desselben Koppelmoduls verbindbar ist
- jedes Koppelmodul mit einer Mehrzahl von doppelt so viele Simplex-Eingänge (e) wie Simplex-Ausgänge (a) aufweisenden Koppelelementen (SE) gebildet ist
- die Koppelelemente in zwei Reihen angeordnet sind
- ein Koppelelement der zweiten Reihe zusammen mit zwei Koppelelementen der ersten Reihe, deren Simplex-Ausgänge mit den Simplex-Eingängen des Koppelelements der zweiten Reihe verbunden sind, eine Koppelelementgruppe bilden
- die Simplex-Eingänge der Koppelmoduln der ersten Stufe einerseits mit den Simplex-Eingängen der koppelmodulzugehörigen Koppelelemente der ersten Reihe verbunden sind und andererseits zum Anschluß von Eingangsleitungen zur Verfügung stehen
- die Simplex-Ausgänge eines Koppelmoduls durch Simplex-Ausgänge eines koppelmodulzugehörigen Koppelelements gegeben sind
- zur Schaltung von Kurzwegen ein gleich großer Teil der Simplex-Eingänge und der Simplex-Ausgänge eines Koppelmoduls der ersten Stufe mit jeweils zur gleichen Verbindungsleitung gehörenden Eingangs- bzw. Ausgangsleitungen verbunden ist, während die übrigen Simplex-Eingänge bzw. Simplex-Ausgänge mit Signale von bzw. zu Koppelmoduln der zweiten Stufe heranführenden bzw. weiterleitenden Zwischenleitungen (ZL) verbunden sind
- an die Ausgänge ein und derselben Koppelelementgruppe nur Ausgangsleitungen oder nur Zwischenleitungen angeschlossen sind,
**dadurch gekennzeichnet,** daß
- die Eingänge des einen Koppelelements der ersten Reihe einer Koppelelementgruppe, deren Ausgänge mit Ausgangsleitungen verbunden sind, nur mit Eingangsleitungen verbunden sind
- die Eingänge des anderen Koppelelements der ersten Reihe einer Koppelelementgruppe, deren Ausgänge mit Ausgangsleitungen verbunden sind, nur mit Zwischenleitungen verbunden sind
- eine Reihe von zwei zusätzlichen Koppelelementen vorgesehen ist, deren Eingänge nur mit den Eingangsleitungen verbunden sind und deren Ausgänge mit Zwischenleitungen verbunden sind.

2. Schaltungsanordnung für ein Koppelnetzwerk nach Anspruch 1,
**dadurch gekennzeichnet,** daß
die Hälfte der Simplex-Eingänge eines Koppelmoduls der ersten Stufe mit Simplex-Eingangsleitungen und die Hälfte der Simplex-Ausgänge eines Koppelmoduls der ersten Stufe mit jeweils zur gleichen Duplex-Verbindungsleitung wie die Simplex-Eingangsleitung gehörenden Simplex-Ausgangsleitungen verbunden sind.
